# EUROPEAN PATENT SPECIFICATION

(11) **EP 2 445 356 B1**
(45) Date of publication and mention of the grant of the patent: **19.04.2017**
(21) Application number: 10792494.6
(22) Date of filing: 25.05.2010
(51) Int. Cl.: A23G 9/12, A23G 9/14, F25D 11/00, B21D 53/02, B67D 7/80, F28D 7/10

(54) **SEMI-FROZEN PRODUCT DISPENSING APPARATUS**
VORRICHTUNG ZUR AUSGABE EINES HALBGEFRORENEN PRODUKTS
APPAREIL DE DISTRIBUTION D'UN PRODUIT SEMI-CONGELÉ

(30) Priority: 26.06.2009 US 220789 P
(43) Date of publication of application: 02.05.2012
(73) Proprietor: Carrier Corporation, Farmington, CT 06034 (US)
(72) Inventor: WADLE, Stephen M., Beloit Wisconsin 53511 (US); NEWTON, Robert K., Beloit Wisconsin 53511 (US); MCNAMEE, Peter F., Beloit Wisconsin 53511 (US); BOYER, George C., Rockton Illinois 61072 (US)
(74) Representative: Taylor, Adam David
(86) International application number: PCT/US2010/036035
(87) International publication number: WO 2010/151390

(56) References cited:
- EP-A1- 0 395 080
- US-A- 5 419 150
- US-A- 5 709 095
- US-A1- 5 575 066
- US-B1- 6 253 573

## Description

### Field of the Invention

This invention relates generally to apparatus for freezing and dispensing semi-frozen products and, more particularly, to an improved evaporator configuration for removing heat from the product within the product freezing chamber of the dispensing apparatus.

### Background of the Invention

Soft-serve ice cream, yogurt, custard and other semi-frozen food products, as well as semi-frozen drinks, sometimes referred to as slushes, are commonly dispensed through a dispensing apparatus having a freezing cylinder. The freezing cylinder, also referred to as a barrel, defines a longitudinally elongated freezing chamber. Typically, unfrozen liquid product mix is added to the freezing chamber at the aft end of the freezing cylinder and selectively dispensed at the forward end of the freezing cylinder through a manually operated dispensing valve. A rotating beater, typically formed by two or more helical blades driven by a drive motor at a desired rotational speed, scrapes semi-frozen mixture from the inner wall of the freezing cylinder and moves the product forwardly through the freezing chamber defined within the freezing cylinder as the product transition from a liquid state to a semi-frozen state. The product within the freezing chamber changes from a liquid state to a semi-frozen state as heat is transferred from the product to a refrigerant flowing through an evaporator disposed about the freezing cylinder. The evaporator is operatively associated with and part of a conventional refrigeration system that also includes a compression device and a refrigerant condenser arranged in a conventional refrigerant cycle in a closed refrigerant circuit. Dispensing apparatus of this type may have from a single freezing cylinder for dispensing a single flavor of product or a plurality of freezing cylinders, each housing a selected flavor of product, for dispensing each of the selected flavors and even a mix of flavors. U.S. Pat. No. 5,205,129, for example, discloses a semi-frozen food dispensing apparatus having a pair of freezing chambers.

As noted previously, heat is removed from the product within the freezing cylinder and carried away by a refrigerant circulating through an evaporator disposed about the freezing cylinder. In dispensing apparatus having more than one freezing cylinder, an evaporator is disposed about each freezing cylinder. In conventional apparatus for dispensing semi-frozen products, the evaporator is typically configured either as a tube wound around and in contact with the outside wall of the freezing cylinder or as an annular chamber from between the outside wall of the freezing cylinder and the inside wall of an outer cylinder disposed coaxially about the freezing cylinder.

For example, U.S. Pat. Nos. 4,580,905 and 4,732,013 each disclose an evaporator formed of a single continuous round tube that is spirally wrapped about the outer circumference of the freezing cylinder and defines a helical flow passage about the freezing cylinder through which refrigerant is circulated. In a commercial embodiment of a spiral-wound round tube evaporator, the tube has an outside diameter of 3/8 inch (9.525 mm) and an inner diameter of 0.319 inch (8.1 mm). U.S. Pat. No. 6,619,067 discloses a cooling unit having a freezing pipe helically would around an outer surface of a cylindrical freezer housing with consecutive turns of the freezing pipe in contact with one another. The freezing pipe is flattened against the freezer cylinder and defines a refrigerant flow passage having a generally rectangular cross-section. The helically wound freezing pipe is covered with a metallic surface layer membrane formed thereon and a metallic filler being embedded in the spaces between the abutting turns of the freezing pipe and the evaporator housing.

U.S. Pat. No. 6,253,573 discloses an evaporator suitable for use in freezing food stuffs such as ice cream, ice, non-diary confectionary products and other soft serve products. The evaporator includes an outer cylinder disposed coaxially about and spaced from an inner cylinder that defines a freezing chamber. To cool the product within the freezing chamber, refrigerant is passed through the annular gap formed between the inner and outer cylinders. A plurality of fins extend inwardly from the inner surface of the outer cylinder into the annular gap and form a plurality of channels within the gap. In a disclosed embodiment, the fins have a height of ½ inch (12.7 millimeters) and a thickness of approximately 1/16 inch (1.6 millimeters, with the slots between fins having a width of approximately 1/16 inch (1.6 millimeters). The flow path formed between adjacent fins would therefore have a hydraulic diameter of about 0.111 inches (2.82 millimeters). The outer cylinder, in which the fins are machined, is made of a material having a greater thermal conductivity than the thermal conductivity of the material of which the inner cylinder is made.

A commercial embodiment of a semi-frozen ice cream dispensing apparatus marketed by the Taylor Freezer Company, the freezer shell includes an inner cylinder surrounded by an outer cylinder disposed co-axially about the inner cylinder so as to form an annular gap therebetween. Refrigerant is circulated through the annular gap, with the refrigerant entering to the annular gap toward the aft end of the shell and exiting the annular gap toward the forward end of the shell. A pair of baffles is disposed within the annular gap in axially-spaced relationship. Each baffle extends circumferently about the annular gap through an arc of less than 360 degrees. The baffles, which are formed by a cord compressed between the inner and outer cylinders, are arranged relative to each other so as to define a generally helical refrigerant flow path between the refrigerant inlet to the annular gap and the refrigerant exit from the annular gap. The annular gap has a nominal depth of 0.389 inches (9.88 mm).

US 57090095 discloses a dispensing apparatus having a spirally extending cooling channel surrounding a cylinder.

### Summary of the Invention

In an aspect of the invention, there is provided a semi-frozen product dispensing apparatus having at least one freezing barrel defining a freezing chamber having an inlet at one end for receiving a supply of product and an outlet, a product dispensing valve operatively associated with the outlet of the at least one freezing barrel for dispensing semi-frozen product, and a refrigeration system for circulating chilled refrigerant in heat exchange relationship with the product within the freezing chamber; said freezing barrel having an inner cylinder bounding the freezing chamber and extending longitudinally along a central axis; and an evaporator disposed about at least a portion of an outer surface of said inner cylinder, characterized in that said evaporator comprises a plurality of longitudinally extending channels disposed about the outer circumference of said inner cylinder in parallel relationship to the axis of the cylinder, each channel defining a cross-sectional flow passage having a hydraulic diameter in the range of about 0.02 inch to 0.10 inch (about 0.50 millimeter to 2.54 millimeters). The present disclosure further describes a dispensing apparatus is provided for a semi-frozen product, such as a semi-frozen comestible or a semi-frozen drink. The dispensing apparatus has at least one freezing barrel defining a freezing chamber having an inlet at one end for receiving a supply of product and an outlet, a product dispensing valve operatively associated with the outlet of the at least one freezing barrel for dispensing semi-frozen product, and a refrigeration system for circulating chilled refrigerant in heat exchange relationship with the product within the freezing chamber. The freezing barrel includes an inner cylinder extending longitudinally along a central axis and a longitudinally extending outer cylinder coaxially circumscribing the inner cylinder. A plurality of channels are provided in the outer surface of the inner cylinder at circumferentially spaced intervals about the circumference of the inner cylinder. A plurality of fins are formed in the outer surface of the inner cylinder in alternating relationship with the plurality of channels whereby each channel is formed between a respective pair of circumferentially spaced fins. Each channel of the plurality of channels opens in fluid communication to an inlet header at one end and opens to an outlet header at its other end. In an embodiment, each channel of the plurality of channels extends longitudinally parallel to the axis of the inner cylinder between the inlet header and the outer header.

Each channel of the plurality of channels is machined in the outer surface of the inner cylinder to a preselected depth and thereby forming a plurality of the fins in the outer surface of and integral with the inner cylinder that extend radially outwardly to abut the inner surface of the outer cylinder circumscribing the inner cylinder. The inlet header may be defined by a first recess formed in the outer surface of the inner cylinder, which recess extends circumferentially about a first end of the inner cylinder. The outlet header may be defined by a second recess formed in the outer surface of the inner cylinder, which recess extends circumferentially about a second end of the inner cylinder. Each channel defines a refrigerant flow passage extending between the inlet header and the outlet header. The inlet header has at least one inlet opening for receiving refrigerant from the refrigerant system and the outlet header has at least one outlet opening for returning refrigerant to the refrigerant system.

Each channel of the plurality of channels extends longitudinally in parallel relationship to the axis of the inner cylinder. The plurality of channels may be disposed at circumferentially equally spaced intervals about the circumference of the inner cylinder. Each of the channels may define a flow passage having a cross-sectional flow area having a generally rectangular cross-section. Each of the channels may define a flow passage having a cross-sectional flow area having a generally square cross-section. In an embodiment, each of the channels defines a flow passage having a cross-sectional flow area having a hydraulic diameter of about 0.0625 inch (1.5875 millimeters). Each of the channels defines a flow passage having a cross-sectional flow area having a hydraulic diameter in the range of about 0.02 inch to 0.10 inch (0.508 millimeter to 2.54 millimeters).

A heat exchanger is provided including an inner cylinder extending longitudinally along a central axis and defining a product chamber and a longitudinally extending outer cylinder disposed coaxially about and circumscribing the inner cylinder. A plurality of channels are defined between the inner surface of the outer cylinder and the outer surface of the inner cylinder. Each channel of said plurality of channels defining a heat exchange fluid flow passage extending between an inlet header at a first end of the channels and an outlet header at a second end of the channels. The inlet header has at least one inlet opening for receiving a heat exchange fluid and the outlet header has at least one outlet opening for discharging the heat exchange fluid.

Each channel of the plurality of channels extends longitudinally in parallel relationship to the axis of the inner cylinder. The plurality of channels may be disposed at circumferentially equally spaced intervals about the circumference of the inner cylinder. In an embodiment, the plurality of channels is machined into an outer surface of the inner cylinder. Each of the channels may define a flow passage having a cross-sectional flow area having a generally rectangular cross-section. Each of the channels may define a flow passage having a cross-sectional flow area having a generally square cross-section. Each of the channels defines a flow passage having a cross-sectional flow area having a hydraulic diameter in the range of about 0.02 inch to 0.10 inch (0.508 millimeter to 2.54 millimeters). In an embodiment of the heat exchanger, each of the channels defines a flow passage having a cross-sectional flow area having a hydraulic diameter of about 0.0625 inch (1.5875 millimeters).

### Brief Description of the Drawings

For a further understanding of the disclosure, reference will be made to the following detailed description which is to be read in connection with the accompanying drawing, where:
FIG. 1 is a schematic diagram illustrating an exemplary embodiment of an apparatus for freezing and dispensing a semi-frozen product embodying the invention;
FIG. 2 is a perspective view of an exemplary embodiment of a freezing barrel in accordance with the invention;
FIG. 3 is a perspective view of an exemplary embodiment of the inner cylinder of the freezing barrel of FIG. 2;
FIG. 4 is a sectioned side elevation view of the inner cylinder of FIG.3;
FIG. 5 is a cross-sectional elevation view of the inner cylinder of FIG. 3 taken along line 5-5 with the outer cylinder assembled circumferentially about the inner cylinder; and
FIG. 6 is a magnified view of a segment of the freezing barrel defined within line 6-6 of FIG. 5.
FIG. 7 is a magnified view of a segment of another embodiment of a freezing barrel in accordance with an aspect of the invention;
FIG. 8 is a sectioned cross-section view of another exemplary embodiment of a freezing barrel in accordance with an aspect of the invention;
FIG. 9 is a sectioned cross-section view of a microchannel tube of the evaporator of the freezing barrel illustrated in FIG. 8;
FIG. 10 is a plan view showing an assembly layout of a microchannel tube evaporator; and
FIG. 11 is a side elevation view, partly in section, of the microchannel tube evaporator of FIG. 10.

### Detailed Description of the Invention

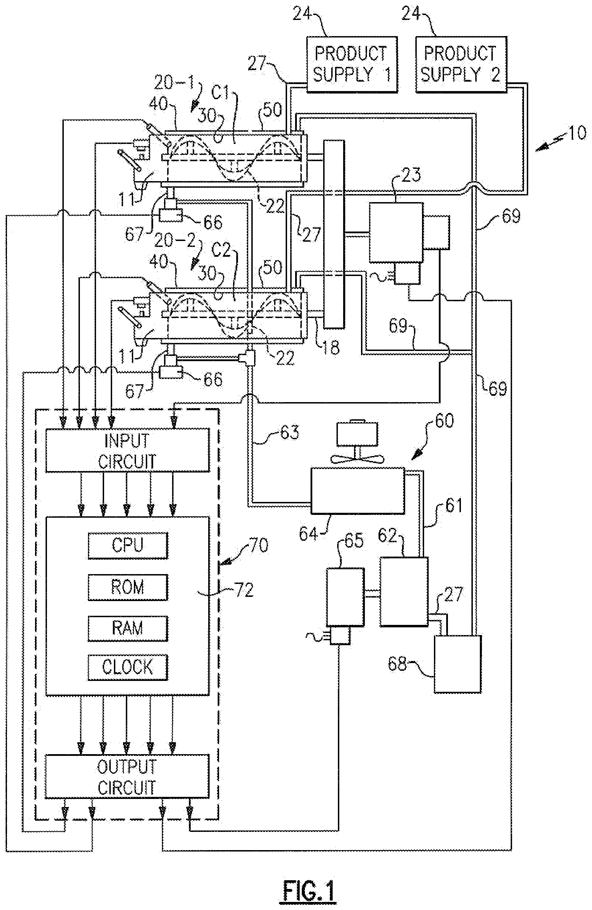

Referring initially to FIG. 1, there is depicted schematically an exemplary embodiment of an apparatus 10 for freezing and dispensing semi-frozen food products, such as by way of example, but not limited to, soft-serve ice cream, ice milk, yogurt, custard, shakes, carbonated and/or non-carbonated ice slush drinks, that embodies the present invention.

In the depicted embodiment, the apparatus 10 includes two freezing chambers C1 and C2 for dispensing food products of different flavors or types. The freezing chambers C1 and C2 are defined within the axially elongated cylindrical barrels 20-1 and 20-2, respectively. Although shown as a dual barrel dispenser, it is to be understood that the apparatus 10 may have only a single barrel machine for dispensing a single product or may have three or more barrels for dispensing a plurality of flavors or types of products or a mix of flavors. Each of the barrels 20-1, 20-2 includes an inner cylinder 30, an outer cylinder 40 circumscribing the inner cylinder 30 and an evaporator 50 formed between the inner cylinder 30 and the outer cylinder 40. Refrigerant is supplied from a refrigeration system 60 to the evaporators 50 of the respective barrels 20-1, 20-2 for refrigerating product resident within the respective freezing chambers C1 and C2.

A beater 22 is coaxially disposed and mounted for rotation within each of the chambers C1 and C2. Each beater 22 is driven by a drive motor 23 to rotate about the axis of its respective one of the barrels 20-1, 20-2. In the embodiment depicted in FIG. 1, a single drive motor, when energized, simultaneously drives each of the beaters 22 in rotation about the axis of its respective barrel. However, it is to be understood that each beater 22 may be driven by a motor dedicated solely to driving that respective beater. A respective product supply 24 is operatively associated with each of the barrels 20-1, 20-2 for supplying product to be frozen to the respective chamber C1 and C2 with which the product supply is associated. The apparatus 10 is also equipped with a dispensing valve system that is selectively operable for dispensing the semi-frozen product from the barrels in a manner well known in the art.

The refrigeration system 60 includes a single refrigerant vapor compressor 62 driven by a compressor motor 65 operatively associated with the compressor 62, and condenser 64 connected with the evaporators 50 in a refrigerant circuit according to refrigeration cycle. The compressor 62 is connected in refrigerant flow communication by high pressure outlet line 61 connected to the refrigerant inlet to the condenser 64 and the refrigeration outlet of the condenser 64 is connected through a high pressure refrigerant supply line 63 to refrigerant flow control valves 66, one of which being operatively associated with one of the evaporators 50 of barrel 20-1 and the other being operatively associated with the other of the evaporators 50 of barrel 20-2. Each of the valves 66 is connected by a respective refrigerant line 67 to the refrigerant inlet of the respective evaporator 50 associated therewith. A respective refrigerant outlet of each evaporator 50 is connected through a low pressure refrigerant return line 69 and an accumulator 68 to the suction side of the compressor 62. The refrigerant flow control valves 66 may, for example, comprise on/off solenoid valves of the type which can be rapidly cycled between an open position passing flow of refrigerant to an associated evaporator 50 and a closed position blocking flow of refrigerant to an associated evaporator. The valves 66 may be pulse width modulated solenoid valves or electronic motor operated valves.

Different products have different thermal transfer rates and different freezing points. Therefore, operation of the refrigeration system 60 will vary dependent upon the products being supplied to the freezing chambers C1 and C2. Operation of the refrigeration system 60 may be controlled by a control system 70 that controls operation of the compressor drive motor 65, the beater motor 23, and the flow control valves 66. The control system 70 includes a programmable controller 72 that includes a central processing unit with associated memory, input and output circuits, and temperature sensors for sensing the temperature of the product within the chambers C1 and C2. For a more thorough discussion of the design and operation of an exemplary control system 70 reference is made to U.S. Pat. No. 5,205,129 .

In the depicted embodiment, each barrel 20 is equipped with a selectively operable dispensing valve 11 disposed at the forward end of the barrel 20 for receiving product from the freezing chamber. However, as in some conventional dual barrel dispensers, the dispensing valve system may include a third dispensing valve selectively operable to dispense a mix of the two flavors or types of products present in the mixing chambers C1 and C2. The dispensing valve system may also comprise a single selectively operable valve that is selectively positionable in a first position to dispense product from chamber C1 only, in a second position to dispense product from chamber C2 only, and in a third position to dispense mix of the products from both chambers C1 and C2.

Briefly, in operation, product to be frozen is supplied to each of the chambers C1 and C2 from the respective product supply 24 associated therewith from a supply tube 27 opening into the chamber at the aft end of each barrel 20. The product supplies 24 are arranged, as in conventional practice, to feed as required a liquid comestible product mix and generally, but not always, an edible gas, such as for example, air, nitrogen, carbon dioxide or mixtures thereof, in proportions to provide a semi-frozen food product having the desired consistency. The liquid comestible product mix may be refrigerated by suitable apparatus (not shown) to pre-cool the product mix to a preselected temperature above the freezing temperature of the product mix prior to delivery to the chambers C1 and C2. The beaters 22 rotates within its respective chamber C1, C2 so as churn the product mix resident within the chamber and also move the product mix to the forward end of the chamber for delivery to the dispensing valve 11. The blades of the beaters 22 may also be designed to pass along the inner surface of the inner cylinder 30 as the beater rotates so as to scrape product from the inner surface of the inner cylinder 30. As the product mix churns within the chambers C1 and C2, the product mix is chilled to the freezing point temperature to produce a semi-frozen product ready-on-demand for dispensing. If gas is added to the product mix, the gas is thoroughly and uniformly dispersed through out the product mix as the beaters rotate.

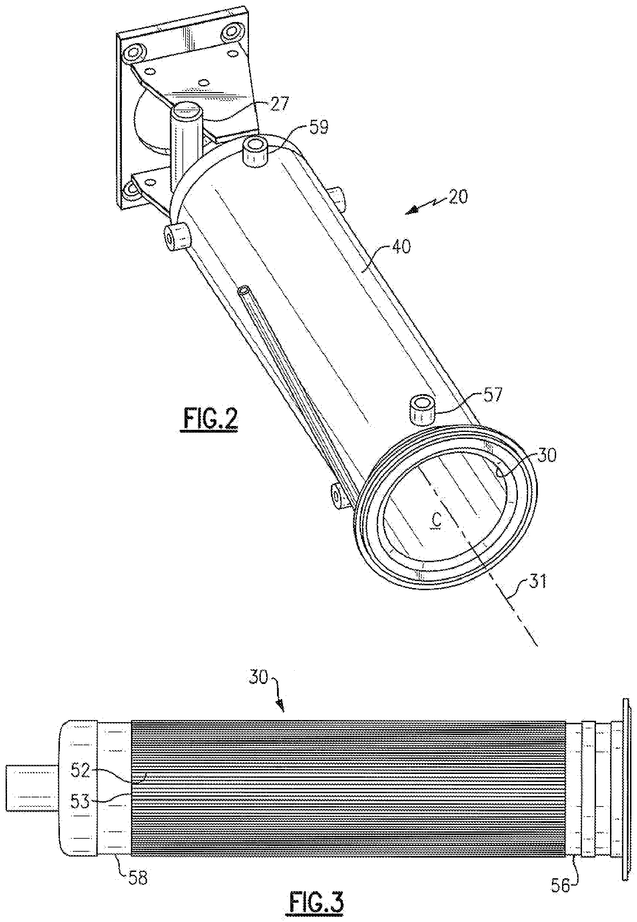

Referring now to FIGs. 2-6, in particular, each freezing barrel 20 includes an inner tube 30, an outer tube 40 circumscribing the inner tube 30 and an evaporator 50 formed between the inner tube 30 and the outer tube 40. The inner tube 30 comprises a cylinder extending longitudinally along a central axis 31 and having an inner surface bounding the freezing chamber C and an outer surface 34. The outer tube 40 comprises a cylinder extending longitudinally along the axis 31 and coaxially circumscribing the longitudinally extending inner cylinder 30. The outer cylinder 40 has an inner surface 42 facing the outer surface 34 of the inner cylinder 30. Both the inner cylinder 30 and the outer cylinder 40 may be made from food grade stainless steel or other metal approved for use in connection in food processing applications. A product supply tube 27 opens into the freezing chamber C through a first end of the inner cylinder 30 of the barrel 20, which end is also referred to herein as the feed end or aft end. The dispensing valve 11 is disposed at the axially opposite end of the barrel 20, which end is also referred to herein as the discharge end or forward end.

The outer surface of the inner cylinder 30 is provided with a plurality of fins 52 and a plurality of channels 53 disposed at circumferentially spaced intervals in alternating relationship with a plurality of fins 52 about the circumference of the outer surface of the inner cylinder 30. The fins 52 and channels 53 may be formed integrally with the shell of the first cylinder 30, for example, by machining material from the outer surface of the inner cylinder 30 thereby simultaneously forming the channels 53 and the fins 52 that alternate with and extend radially outwardly between channels 53. The inner cylinder could also be formed with the fins 52 being made integral therewith by extrusion. In an embodiment, the inner cylinder 30 has an outer shell diameter that nearly matches the inside shell diameter of the outer cylinder 40, such that when the channels 53 are machined in the outer surface 34 of the inner cylinder 30 thereby forming the plurality of the fins 52 of the inner cylinder 30, the fins 52 extend radially outwardly to abut the inner surface 42 of the outer cylinder 40 when the barrel 20 is assembled by slip fitting the outer cylinder 40 over the inner cylinder 30.

The outer surface 34 of the inner cylinder 30 is also provided with a first recess 56 and a second recess 58 formed in and extending circumferentially about the outer surface 34 of the inner cylinder 30 at longitudinally spaced end regions of the inner cylinder 30. In the depicted exemplary embodiment the first recess 56 is at the product discharge end of the inner cylinder 30 and the second recess 58 is at the product feed end thereof. The first cylinder 30 has at least one inlet 57 opening to first recess 56 for receiving refrigerant from the refrigerant system 60 and has at least one outlet 59 opening to the second recess 58 for returning refrigerant to the refrigerant system 60. In the exemplary embodiment depicted in FIGs. 3-6, four refrigerant inlets 57 are provided at equally spaced circumferential intervals about the first recess 56 and four refrigerant outlets 59 are provided at equally spaced circumferential intervals about the second recess 58.

Each channel 53 forms a refrigerant flow passage that extends between and establishes fluid flow communication between the first recess 56 and the second recess 58. In the depicted embodiment, each channel 53 of the plurality of channels extends longitudinally parallel to the axis 31 of the inner cylinder 30 between the first recess 56 and the second recess 58. Thus, the first recess 56 forms a refrigerant inlet header and the second recess forms a refrigerant outlet header which together with the channels 53 formed in the inner cylinder 30, in assembly with the outer cylinder 40, provides a heat exchanger, which in the embodiment described herein defines the evaporator 50 of the freezing barrel 20 through which refrigerant is circulated in heat exchange relationship with the product resident within the freezing chamber C bounded by the inner surface of the inner cylinder 30 for chilling the product resident therein. The first recess 56 is connected in fluid flow communication via at least one inlet 57 with the refrigerant supply line 63 through valve 66 and line 67 to receive refrigerant into the evaporator 50, while the second recess 58 is connected in fluid flow communication via at least one outlet 59 with the refrigerant line 69 for passing refrigerant from the evaporator 50. In the depicted embodiment, four inlets 57 are provided to the first recess 56 at circumferentially spaced intervals of ninety degrees. Similarly, four outlets 59 are provided to the second recess 58 at circumferentially spaced intervals of ninety degrees.

In an embodiment, each channel 53 of the plurality of channels is machined into the outer surface of the inner cylinder 30 to define a flow passage having a desired cross-section shape, such as for example a generally rectangular or square cross-sectional shape. Each of the channels defines a flow passage having a cross-sectional flow area having a hydraulic diameter in the range of about 0.02 inch to 0.10 inch (about 0.50 millimeter to 2.54 millimeters). For example, in an embodiment, each of the channels 53 may be machined to have a depth of 0.0625 inch (1.5875 millimeters) and a width of 0.0625 inch (1.5875 millimeters) thereby defining a flow passage having a cross-sectional flow area having a hydraulic diameter of about 0.0625 inch (1.5875 millimeters). The plurality of channels 53 may be disposed at circumferentially equally spaced intervals about the circumference of the inner cylinder. For example, in an exemplary application of the semi-frozen product dispensing apparatus 10, an inner cylinder 30 of a freezing barrel 20 having an outer shell diameter of 4.1 inches (104 millimeters), a total of 128 equally circumferentially spaced channels 53 might be disposed about the circumference of the outer surface of the inner cylinder 30.

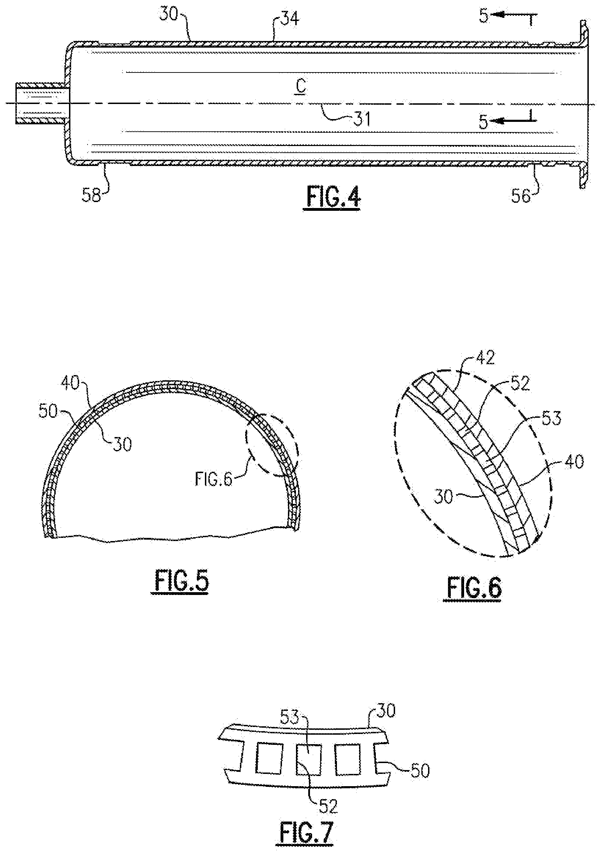

In an embodiment, as depicted in FIG. 7, the evaporator 50 is extruded as an integral member having a plurality of channels 53 disposed at spaced intervals about the evaporator 50. In the extrusion process, the channels 53 are formed between fins 52 that are formed integrally with and extend between a pair of spaced walls. The evaporator 50 may be formed in the flat and rolled into a cylindrical shape with the fins 52 extending radially or extruded in a cylindrical shape with the fins 52 extending radially. The cylindrically formed evaporator 50 is then assembled over the inner cylindrical shell 30, as illustrated in FIG. 7, and brazed or soft-soldered in place over the outer surface of the inner shell 30. Since the structure of the extruded evaporator 50 provides for containment of the pressure of the refrigerant passing through the channels 53, no outer shell is required. Further, the shell 30 does not need to be designed to contain the high pressure of the refrigerant flowing through the evaporator 50 and may be made of a thinner thickness stainless steel than would be required in the case where the shell 30 forms a part of the refrigerant containment structure.

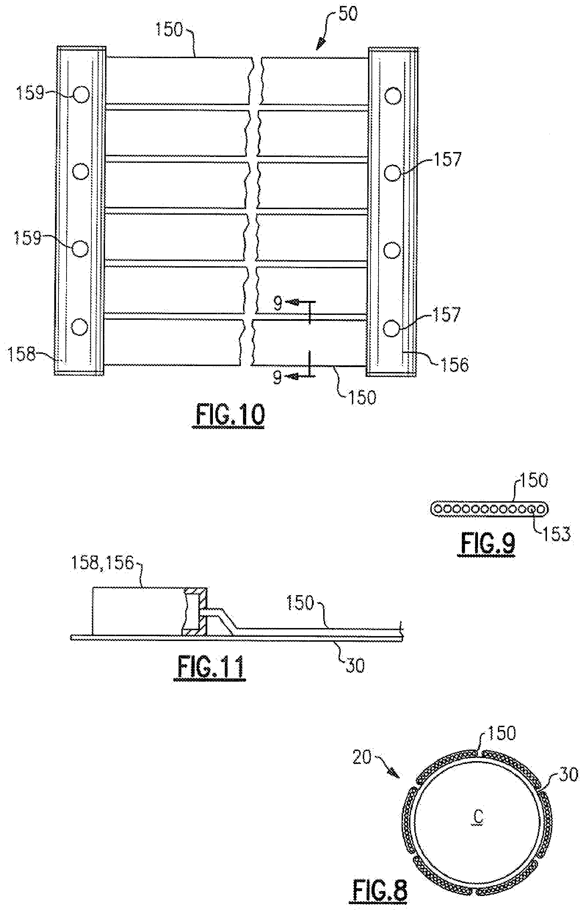

Referring now to FIGs. 8-11, in particular, in the exemplary embodiment of the freezing barrel 20 depicted therein, the evaporator 50 is formed of a plurality of microchannel tubes 150 that extend longitudinally between a pair longitudinally spaced apart end distribution tubes 156, 158. Each microchannel tube 150 defines a plurality of microchannels 153 that extend longitudinally in parallel the entire length of the tube 150. Each microchannel 153 defines a flow passage that extends in fluid flow communication between a flow distribution chamber defined by the end distribution tube 156 and a flow distribution chamber defined by the end distribution tube 158. The microchannels 153 may have a round cross-section as illustrated in FIG. 9, or may have a rectangular of otherwise cross-section as desired. In an embodiment, each of the microchannels 153 defines a flow passage having a cross-sectional flow area having a hydraulic diameter in the range of about 0.02 inch to 0.10 inch (about 0.50 millimeter to 2.54 millimeters). In an embodiment, each of the microchannels 153 defines a flow passage having a cross-sectional flow area having a hydraulic diameter of about 0.0625 inch (1.5875 millimeters).

The end distribution tube 156 extends circumferentially about the outer surface of the aft end of the shell 30 and the end distribution tube 158 extends circumferentially about the outer surface of the aft end of the shell 30. The microchannel tubes 150 cover the outer surface 32 of the shell 30 which defines the freezing chamber C and run the length of the inner shell 30 between the end distribution tubes 156 and 158. The end distribution tube 156 includes at least one inlet 157 which connects a flow distribution chamber defined within the end distribution tube 156 in fluid flow communication with the refrigerant supply line 63 through valve 66 and line 67 to receive refrigerant into the evaporator 50. The end distribution tube 158 includes at least one outlet 159 which connects a flow distribution chamber defined within the end distribution tube 158 in fluid flow communication with the refrigerant line 69 for passing refrigerant from the evaporator 50. Thus, the end distribution tube 156 serves as a refrigerant inlet header of the evaporator 50 and the end distribution tube 158 serves as a refrigerant outlet header of the evaporator 50.

The microchannel tubes structurally contain the pressure of the refrigerant passing through the channels 153. Therefore, the shell 30 does not need to be designed to contain the high pressure of the refrigerant flowing through the evaporator 50 and may be made of a thinner thickness stainless steel than would be required in the case where the shell 30 forms a part of the refrigerant containment structure. Additionally, in the design, the outer shell 40 may be eliminated.

The microchannel tubes 150 may be attached to the outer surface of the freezing shell 30 by various methods, including for example soft soldering, brazing, or clamping. In a construction method, the microchannel tubes 150 and the end distribution tubes 156, 158 are laid out flat in assembly, for example as illustrated in FIGs. 10 and 11, and then brazed or soft soldered in a furnace. The completed assembly of the microchannel tubes 150 and the end distribution tubes 156, 158 may then be rolled unto and brazed or soft-soldered to the outer surface 34 of the shell 30 to form the freezing barrel 20 as illustrated in FIG. 8. The surfaces of the microchannel tubes 150 and the end distribution tubes 156, 158 that are in contact with the outer surface of the shell 30, as well as the outer surface 34 of the shell 30, have may be plated with copper to facilitate brazing or soft-soldering. Alternatively, the microchannel tubes 150 or tube segments and the end distribution tubes 156, 158 may formed into a cylindrical shape prior to being brazed or soft-soldered into an assembly.

The heat exchange efficiency of the evaporator 50 comprising a relatively large number of refrigerant flow channels, each having a relatively small hydraulic diameter, is significantly higher than that of prior art evaporators described herein before. Heat exchange is increased in part due to the increase in the effective heat transfer area between the refrigerant and the inner cylinder 30 due to the fins 52 flanking the channels 53 and in part due to the increased heat transfer effectiveness associated with the very small hydraulic diameter flow passages defined by the respective channels 53.

The terminology used herein is for the purpose of description, not limitation. Specific structural and functional details disclosed herein are not to be interpreted as limiting, but merely as basis for teaching one skilled in the art to employ the present invention.

## Claims

1. A semi-frozen product dispensing apparatus having at least one freezing barrel defining a freezing chamber having an inlet at one end for receiving a supply of product and an outlet, a product dispensing valve operatively associated with the outlet of the at least one freezing barrel for dispensing semi-frozen product, and a refrigeration system for circulating chilled refrigerant in heat exchange relationship with the product within the freezing chamber; said freezing barrel having an inner cylinder bounding the freezing chamber and extending longitudinally along a central axis; and an evaporator disposed about at least a portion of an outer surface of said inner cylinder, **characterized in that** said evaporator comprises a plurality of longitudinally extending channels disposed about the outer circumference of said inner cylinder in parallel relationship to the axis of the cylinder, each channel defining a cross-sectional flow passage having a hydraulic diameter in the range of about 0.50 millimetre to 2.54 millimetres (about 0.02 inch to 0.10 inch).

2. A semi-frozen product dispensing apparatus as recited in claim 1 wherein each channel of said plurality of channels defines a flow passage having a cross-sectional flow area having a hydraulic diameter of about 1.5875 millimetres (about 0.0625 inch).

3. A semi-frozen product dispensing apparatus as recited in claim 1 wherein said plurality of channels is defined by at least one microchannel tube disposed about the outer circumference of said inner cylinder.

## Patentansprüche

1. Vorrichtung zur Ausgabe eines halbgefrorenen Produkts mit mindestens einem Gefrierfass, das eine einen Einlass an einem Ende zum Aufnehmen einer Produktzufuhr und einen Auslass aufweisende Gefrierkammer definiert, wobei ein Produktausgabeventil mit dem Auslass des mindestens einen Gefrierfasses zur Abgabe von halbgefrorenem Produkt und einem Kühlsystem zum Zirkulieren von gekühltem Kältemittel in Wärmetauschbeziehung mit dem Produkt in der Gefrierkammer wirkverbunden ist; wobei das Gefrierfass einen Innenzylinder aufweist, der die Gefrierkammer begrenzt und sich längs entlang einer Mittelachse erstreckt; und einen Verdunster, der zumindest um einen Teil einer Außenfläche des Innenzylinders herum angeordnet ist, **dadurch gekennzeichnet, dass** der Verdunster eine Mehrzahl sich längs erstreckender Kanäle umfasst, die um den Außenumfang des Innenzylinders herum in Parallelbeziehung zu der Achse des Zylinders angeordnet sind, wobei jeder Kanal einen Strömungsdurchgangsquerschnitt mit einem hydraulischen Durchmesser im Bereich von etwa 0,50 Millimetern bis 2,54 Millimetern (etwa 0,02 Zoll bis 0,10 Zoll) definiert.

2. Vorrichtung zur Ausgabe eines halbgefrorenen Produkts nach Anspruch 1, wobei jeder Kanal aus der Mehrzahl von Kanälen einen Strömungsdurchgang mit einer Strömungsquerschnittsfläche definiert, die einen hydraulischen Durchmesser von etwa 1,5875 Millimetern (etwa 0,0625 Zoll) aufweist.

3. Vorrichtung zur Ausgabe eines halbgefrorenen Produkts nach Anspruch 1, wobei die Mehrzahl von Kanälen durch mindestens eine Mikrokanalröhre definiert ist, die um den Außenumfang des Innenzylinders herum angeordnet ist.

## Revendications

1. Appareil de distribution de produit semi-congelé ayant au moins un cylindre de congélation définissant un compartiment de congélation ayant une entrée au niveau d'une extrémité pour recevoir un approvisionnement en produit et une sortie, une soupape de distribution de produit associée de manière opérationnelle à la sortie de l'au moins un cylindre de congélation pour distribuer un produit semi-congelé, et un système de réfrigération pour faire circuler un fluide réfrigérant refroidi en relation d'échange de chaleur avec le produit à l'intérieur du compartiment de congélation ; ledit cylindre de congélation ayant un cylindre interne délimitant le compartiment de congélation et s'étendant longitudinalement le long d'un axe central ; et un évaporateur disposé autour d'au moins une partie d'une surface externe dudit cylindre interne, **caractérisé en ce que** ledit évaporateur comprend une pluralité de canaux s'étendant longitudinalement disposés autour de la circonférence externe dudit cylindre interne en relation parallèle à l'axe du cylindre, chaque canal définissant un passage d'écoulement en section transversale ayant un diamètre hydraulique dans la plage d'environ 0,50 millimètre à 2,54 millimètres (environ 0,02 pouce à 0,10 pouce).

2. Appareil de distribution de produit semi-congelé selon la revendication 1, dans lequel chaque canal de ladite pluralité de canaux définit un passage d'écoulement ayant une zone d'écoulement en section transversale ayant un diamètre hydraulique d'environ 1,5875 millimètre (environ 0,0625 pouce).

3. Appareil de distribution de produit semi-congelé selon la revendication 1, dans lequel ladite pluralité de canaux est définie par au moins un tube à microcanaux disposé autour de la circonférence externe dudit cylindre interne.
